# EUROPEAN PATENT APPLICATION

(11) **EP 4 838 462 A2**
(43) Date of publication of application: **11.11.2026**
(21) Application number: 26202552.1
(22) Date of filing: 17.04.2024
(51) Int. Cl.: G06T 7/00

(54) **METHODS AND SYSTEMS AND AUTOMATIC EXAMPLE-BASED PARAMETER ESTIMATION IN MACHINE VISION**

(62) Document number(s) of the earlier application(s) in accordance with Art. 76 EPC: 24170681.1 / 4 636 707
(71) Applicant: MVTec Software GmbH, 80634 München (DE)
(72) Inventor: HOFHAUSER, Andreas, 82256 Fürstenfeldbruck (DE); HAIDAR, Ayah, 82140 Olching (DE); MEYER, Maximilian, 94104 Witzmannsberg (DE); SENN, Florian, 81673 München (DE)
(74) Representative: Vossius & Partner Patentanwälte Rechtsanwälte mbB

(57) **Abstract**

The present disclosure provides methods that estimate or improve various parameters of an object recognition model to improve runtime, accuracy and robustness while minimizing the required user interaction to optimize these values. In one aspect of the invention, methods are defined to generate object recognition models with refined contours. A further method is defined by the invention to estimate level-specific parameters for the object recognition algorithms.

## Description

### CROSS-REFERENCES TO RELATED APPLICATIONS

This application is related to U.S. Patent No. 7,062,093 B2, titled "System and Method for Object Recognition", and filed Sep. 26, 2001, the entire disclosure of which is hereby incorporated by reference herein.

### FIELD OF THE INVENTION

This invention relates generally to machine vision systems, and more particularly, to visual recognition of objects.

### BACKGROUND OF THE INVENTION

Object recognition is part of many computer vision applications. It is particularly useful for industrial inspection tasks, where often a model of an object must be found in an image of the object, resulting in a transformation (also called pose) that encodes the location of the object in the image. This transformation can be used for various tasks, e.g., robot control, pick and place operations, quality control, or inspection tasks.

The model of the object is defined by a variety of parameters, which can include the object shape or gray values, image regions where to search for instances, the allowed range of transformations, pyramid-specific parameters, and others. In current machine vision systems, the generated model can often benefit from further optimization and refinement of such parameters to improve runtime, accuracy, and robustness. However, for most methods, this process of editing and refining the model manually can be complex and time-consuming. For example, many systems offer a graphical mechanism for editing the model contours manually (see MVTec HDevelop Users' Guide, 2022, Chapter 7.3 Matching Assistant: 7.3.3.9 The Tab Creation). It is desirable to provide a method that automates such refinement steps, such as the removal of artefacts from the generated models or optimizing the transformation parameters. This automation reduces the possible errors and the time required to setup an object recognition model, while at the same time yielding an object recognition model that has better performance in terms of runtime and detection than manually tuned models.

One set of parameters is the shape of the object. The shape is typically either generated from a template image of the object or provided as a contour from, e.g., a CAD model and is represented by a list of model points that define the shape or gray values of the object. One possible optimization is to remove model points that have a low probability of being matched in the given use-case, or to add points that are repeatable but not yet part of the model. This can include, for example, points created by shadows, reflections, or noise in the case where the model of the object is generated from a template image. In some cases, a CAD model contains also contours that are not clearly defined or visible in real images of the object.

Another set of parameters influence the search processes itself. To increase the degree of automation and to improve the ease of use of the recognition system, some systems provide methods to determine such parameters automatically. An example of such machine vision systems already implements automatic parameter determination to simplify the step of model creation (Ulrich and Steger, 2006). Another example speeds up the search phase while improving the recognition rate (see MVTec HDevelop Users' Guide, 2022, Chapter 7.3 Matching Assistant). Most of those systems use various discretization levels to speed up the detection process by searching only the highest possible level exhaustively. Possible candidates are identified on the highest possible level and tracked to lower levels (Steger, 2001)). On typical machine vision systems, parameters are estimated using only the original image, if available. The values of the estimated parameters are then tweaked using heuristics to optimize the performance and runtime of the method. This might result in suboptimal parameter values that can lead to the loss of good candidates or the tracking of unneeded candidates. The latter results in unneeded longer execution times. A method that finds suitable parameter values, ideally for each of the used pyramid level, is highly desirable to improve the speed, robustness, and accuracy of an object recognition model as well as to allow for setting up such systems by non-expert users.

Methods that automate model refinement steps and automatically find suitable level-specific parameter values are mostly limited because the model is generated using only a single image or CAD model. Extending the generation method to accept not only a template image or CAD model, but also more sample images, allows improving object recognition in many aspects. Exploiting the sample images results in a more stable and refined model. Additionally, the automatic parameter estimation of creation and search parameters can be extended to automatically estimate values for each of the used pyramid levels.

### SUMMARY OF THE INVENTION

This invention provides methods that estimate or improve various parameters of an object recognition model to improve runtime, accuracy and robustness while minimizing the required user interaction to optimize these values. In one aspect of the invention, methods are defined to generate object recognition models with refined contours. A further method is defined by the invention to estimate level-specific parameters for the object recognition algorithms.

According to a first aspect, the disclosure provides a method for robustly updating parameters of an object recognition model, comprising the steps of
a. providing an object recognition model, the model containing a plurality of model points, each model point augmented with a coordinate and a direction vector;
b. providing at least one digital image, each digital image containing at least one object instance;
c. obtaining, for each digital image, a direction vector for each pixel in the image;
d. obtaining, for each object instance in each digital image, transformation parameters that align the model with said object instance;
e. for each object instance, transforming the model point coordinates into image pixel coordinates by applying the transformation parameters of said instance;
f. collecting, for each model point, the set of direction vectors for all pixels onto which the model point was transformed for the different instances;
g. for each model point, applying a combining function on the set of all collected direction vectors of said model point to produce a new representative direction vector.
h. applying a decision function on the collected direction vectors and representative direction vectors to decide which model points should be regarded as stable;
i. updating the object recognition model by replacing the direction vectors of those model points deemed stable with the representative direction vectors and removing those model points not deemed stable.

Preferably, the combining function includes the addition of all direction vectors, the mean over all direction vectors, or a robust estimator of all direction vectors.

Preferably, the decision function includes a threshold on the length of the representative direction vectors.

Preferably, the combining function additionally computes the variance of the set of all collected direction vectors of each model point, and where the decision function includes a threshold on said variance.

According to a second aspect, the disclosure provides a method for robustly creating an object recognition model, comprising the steps of
a. providing the maximum extent of the target shape;
b. providing at least two digital images, each digital image containing at least one object instance;
c. obtaining, for each pixel in each digital image, a feature vector that contains a direction vector;
d. obtaining, for each object instance in each digital image, transformation parameters that align the object instances in a common coordinate frame;
e. collecting, for each pixel inside the maximum extent of the target shape, the set of feature vectors for all pixels onto which the pixel was transformed for the different instances;
f. for each pixel inside the maximum extent of the target shape, applying a combining function on the set of all collected feature vectors of said pixel to produce a new representative feature vector.
g. applying a decision function on the collected feature vectors and representative feature vectors to decide which pixels should be regarded as stable;
h. creating an object recognition model using those pixels that were deemed stable along with their representative feature vector.

Preferably, the combining function includes the addition of all direction vectors, the mean overall direction vectors, or a robust estimator of all direction vectors.

Preferably, the decision function includes a threshold on the length of the representative direction vectors.

Preferably, the combining function additionally computes the variance of the set of all collected direction vectors of each model point, and where the decision function includes a threshold on said variance.

Preferably, the feature vectors computed in step c additionally contain the gray value of the corresponding pixel.

According to a third aspect, the disclosure provides a method for robustly updating level-specific parameters of an object recognition model, comprising the steps of
a. providing an object recognition model;
b. providing at least one digital image, each digital image containing at least one object instance;
c. providing a set of parameters to be optimized;
d. for each digital image,
   i. creating a multi-level representation of said image, corresponding to discretization levels from coarse to fine, where at least two different discretization levels are used;
   ii. searching the object recognition model on the multi-level representation of said image from coarse to fine discretization levels, producing a set of detected instances;
   iii. identifying, for each detected instance, if it corresponds to an object instance;
   iv. for each detected instance that corresponds to an object instance, collecting the intermediate values of the parameters to be optimized for all discretization levels;
e. for each discretization level and each parameter to be optimized, applying a combining function onto the collected intermediate values of said parameter on said pyramid level to obtain a robust estimate of said parameter, and setting said robust estimate as new parameter in the object recognition model.

Preferably, the set of parameters to be optimized contains at least one of the minimum score, the minimum contrast, the maximum overlap of two matches, the range of rotations, the range of scales, or the search region

Preferably, transformation parameters are provided for each object instance, and said transformation parameters are used to identify which detected instances correspond to object instances in step d.ii.

Preferably, approximate positions are provided for each object instance, and said approximate positions are used to identify which detected instances correspond to object instances in step d.iii.

Preferably, the number of object instances is provided for each digital image, and said number of object instances is used to identify which detected instances correspond to object instances in step d.iii.

Preferably, additional user input is used to identify which detected instances correspond to object instances in step d.iii.

Preferably, the combining function is a quantile of the collected intermediate values. Preferably, where the combining function uses a probabilistic model to estimate a robust parameter based on the collected intermediate values.

According to a fourth aspect, the disclosure provides a system comprising a processor, wherein the processor is configured to execute the method for robustly updating parameters of an object recognition model according to the first aspect.

According to a fifth aspect, the disclosure provides a system comprising a processor, wherein the processor is configured to execute the method for robustly creating an object recognition model according to the second aspect.

According to a sixth aspect, the disclosure provides system comprising a processor, wherein the processor is configured to execute the method for robustly updating level-specific parameters of an object recognition model according to the third aspect.

### LIST OF FIGURES

The invention is described with reference to the following figures in which:
- Fig. 1: is an illustration of a contour refinement process with two images, in accordance with the present invention;
- Fig. 2: is an illustration of a contour refinement process with consistent and random direction vectors, in accordance with the present invention;
- Fig. 3: is is an illustration of a contour refinement process with an initial model and at least one input image, in accordance with the present invention;
- Fig. 4: is an illustration of a contour refinement process with an initial model and input images with additional edges, in accordance with the present invention;
- Fig. 5: is a flow diagram illustrating automatic labelling of input images, in accordance with the present invention; and
- Fig. 6: is a flow diagram illustrating determination of level-specific values, in accordance with the present invention.

### DETAILED DESCRIPTION OF THE PREFERRED EMBODIMENTS OF THE INVENTION

The methods and algorithms described are considered to be in electronic form and computer implemented.

In the following, an **image** or **digital image** refers to an image available in electronic form as a two-dimensional array of pixels. Images are typically representations of the real world, acquired by electronic imaging devices. Alternatively, images can be created synthetically by, for example, rendering a three-dimensional object or transforming another image. Each pixel has one or more **gray values** or **brightness** associated with it. Typically, those gray values represent the brightness of the pixel in an electronic imaging device for a certain set of wavelengths. Multiple gray values per pixel can be used to represent, for example, colored images. Each pixel has an associated two-dimensional **image coordinate** (x,y) that represents its location in the two-dimensional array of pixels. Such coordinates can either be integer-valued, in which case they represent complete pixels, or real-valued, in which case they represent **sub-pixel precise** locations in the image. A **region** in the image is a set of pixels.

The **gradient** of the gray values of an image can be used to define a direction vector and **a contrast value** for each pixel. Different methods exist for estimating the gradient (Steger et al., [chapter 3.7.3], 2018). **Edges** in an image are curves where the gray values change significantly. Edges are typically extracted from an image using methods such as Canny, Deriche, Sobel, or gray value difference filters (Steger et al., [chapter 3.7.2], 2018). Other methods can be used for computing gradients or edges without departing from the spirit of this invention. If computed from an image, edges are typically stored as a connected list of sub-pixel precise coordinates, augmented with a contrast value that indicates how much the gray values change from one side of the edge to the other side. A **contour** consists of a plurality of sub-pixel precise points, each with a corresponding direction vector. The direction vector is typically the gradient or the normalized gradient vector. Contours can be obtained from edges extracted from an image. Alternatively, a CAD model can be discretized to obtain a contour. A **contour model** is a plurality of contours defining the outline and inner edges of an instance of the object to be searched for. The present invention is not limited to edge features but could easily be extended to line features or interest point features by a person ordinarily skilled in the art.

**Coordinate transformations, transformations** or **poses** are functions that transform image coordinates from one coordinate frame to another. Typically, such transformations include translations, rotations, isotropic or anisotropic scaling, or general affine transformations. More generally, the transformations can contain deformations of various kinds that model deformations of an object. Transformations are parametrized using **transformation parameters** or **pose parameters.**

An **object recognition model** or just **model** is a data structure that contains parameters required for finding and locating instances of a certain object in images. The object`s appearance must be known beforehand and is encoded in the object recognition model. The object instances are located by computing the transformation parameters that align an object instance in an image with the object in a reference coordinate frame.

An **object recognition method** is an algorithm that finds instances of an object in a digital image using an object recognition model and returns the transformation parameters that align the object with said found instances (Steger et al., [chapter 3.11], 2018). Such a method is typically divided into an offline phase, where an object recognition model of the object is generated, and an online phase, where said object recognition model of the object is found in search images. The method is typically divided into an offline phase, where the object recognition model is created for a certain object, and an online phase, where the model is used to find object instances in images. Note that this is a purely conceptual split. Some of their steps can be interleaved without departing from the spirit of this invention.

In the **offline phase** or **model generation phase**, an object recognition model is created using a set of parameters. One set of parameters describes the shape of the object, which must be provided by the user. The shape is typically provided either in the form of a **reference image** of the object and a region that encloses the object in the reference image, or as a CAD model of the object. In the case of a reference image, the edges of the image are computed inside the provided region. The resulting edges are optionally filtered by thresholding their contrast. In the case of a CAD model, the edges are directly provided by the CAD model and optionally sampled. In either case, the model is represented as a contour containing a plurality of **model points** ${p}_{i} = {\left({p}_{i}^{x}, {p}_{i}^{y}\right)}^{T}$ and associated direction vectors ${d}_{i} = {\left({d}_{i}^{x}, {d}_{i}^{y}\right)}^{T}$, *i* =1,...,*n*, where *n* is the number of points in the model. The points typically sample the visible edges and contour of the object, while the corresponding direction vectors are orthogonal to said edges and contours. Each point can have an additional feature vector that represents, for example, gray values of color.

Besides the shape of the object, a set of additional parameters can be set in the offline phase to further steer the model generation and the online phase. Among others, those parameters typically contain the **type of transformations** allowed between the model coordinates and the image coordinates. This can include the range of allowed rotation, the range of allowed translation, the range of allowed isotropic or anisotropic scaling as well as more complex deformation models. An additional important parameter is the **minimum score**, which is a threshold on the similarity between the reference object and a detected instance in order for the instance to be returned to the user. Additional possible parameters are described in the sections below.

In the **online phase** or **search phase**, the user provides a search image along with the object recognition model created in the offline phase, and the method uses the model and its parameters to find instances of the object in the search image. This process is called **template matching** or **matching.** It is performed by iterating over the set of possible and allowed transformation parameters and computing, for each transformation parameter, a similarity score between the model transformed with said transformation parameter and the search image using a similarity measure. Positions where this similarity score exceeds a defined **minimum score** and that are local maxima mark potential matches. The minimum score is typically a user-defined parameter. The set of possible and allowed transformation parameters is computed based on user-defined parameters, such as the allowed range of rotations, the range of translations, the range of isotropic or anisotropic scales, or the search region, as well as logical constraints, such as staying inside the image boundaries.

A **similarity score** of **similarity measure** is a metric that represents the similarity between a model that is transformed under some parameters into image coordinates, and a search image. Typically, similarity scores are such that higher scores indicate more similarity between the transformed model and the image. Preferably, similarity scores are normalized to be between 0 (no similarity) and 1 (high similarity). Different similarity scores or similarity measures have been proposed in the literature (Steger et al., [chapter 3.11], 2018)With **normalized correlation** or normalized cross-correlation, the similarity is computed based on the gray values of the model points and the image pixels at the transformed model points. First, the mean and deviation of both gray value sets are normalized independently. Then, the mean pixel-wise similarity of the normalized values is computed. The normalized correlation is invariant against linear gray value changes between the model and the search image. Preferably, this invention uses the **cosine similarity** as similarity measure (see Steger, US Patent No. 7,062,093 B2). For this measure, the mean over the pixel-wise dot product is computed between the normalized direction vectors of the model and the normalized image gradients at the corresponding pixel locations. This similarity measure is robust against partial occlusion and clutter and invariant against nonlinear contrast changes.

For further improvements of the object recognition model, it is sometimes required to obtain sample search images with object instances labeled on each image. The label indicates the position of the object instance on the sample image. This label can be provided as a free-form region, in which the object instance lies. Alternatively, the label can be provided as a bounding box around the object's instance. The bounding box can be an axis parallel rectangle or a rotated rectangle. Alternatively, the label can be provided as transformation parameters between the model and image coordinates. In general, the label should be such that it allows identifying an instance given a pose.

The visible edges of an object might vary for a number of reasons, such as variations in the production process, intrinsic variations in the object class, or artefacts of the image acquisition. Due to this, not all model points might be visible for all object instances, or their location or orientation relative to the object instance might vary. We call a point **stable** if, over all object instances, it has a high probability of being visible and a small variation in relative location or orientation. This definition can be extended to additional feature values, such as gray values. Points with a correspondingly low probability or large variation are called **unstable**.

In most cases, the stable points are not random, but systematic. For example, the outline of an object might consist of stable points due to precise manufacturing and image acquisition, but a texture printed on the object might contain unstable points to do inherent variations during the printing process. For this reason, it is beneficial for a model to rely only or mostly on stable points.

This allows the matching to be faster and more robust, and the computed score to be more expressive. However, when creating a model using a single reference image or CAD model, it is difficult to impossible decide which points are stable, since that is an emergent property over multiple object instances.

This invention uses information from multiple input images or object instances to determine the stable points that should be used as model points. This information is used to generate a new model using the corresponding stable points or to refine an existing model's contour by excluding unstable points and including stable points. Additionally, the information from multiple input images or object instances can be used to refine the sub-pixel precise location, orientation, and feature vectors of stable model points. A model created or refined in such a way is called a **stable object recognition model**.

To generate a stable object recognition model, multiple input images are needed. The input images can be multiple acquisitions of the same object but under different conditions, different instances of the same object, or a mixture of both. To find stable points, the transformations between the different instances must be known. In one embodiment, the input images are pre-aligned. Images are pre-aligned if the object instances in them appear in the same position and orientation. This alignment can be achieved via mechanical fixtures during the acquisition. In another embodiment, if pre-aligned images are not available, a processing step is used to detect the instances of the object in each image and derive transformations from each instance to a reference position. The images are then aligned on each other using the derived transformations. If an image contains multiple instances of the object, multiple aligned images are created by aligning one instance at a time. As a result, a plurality of **aligned images** is obtained where the object instances are always in the same position.

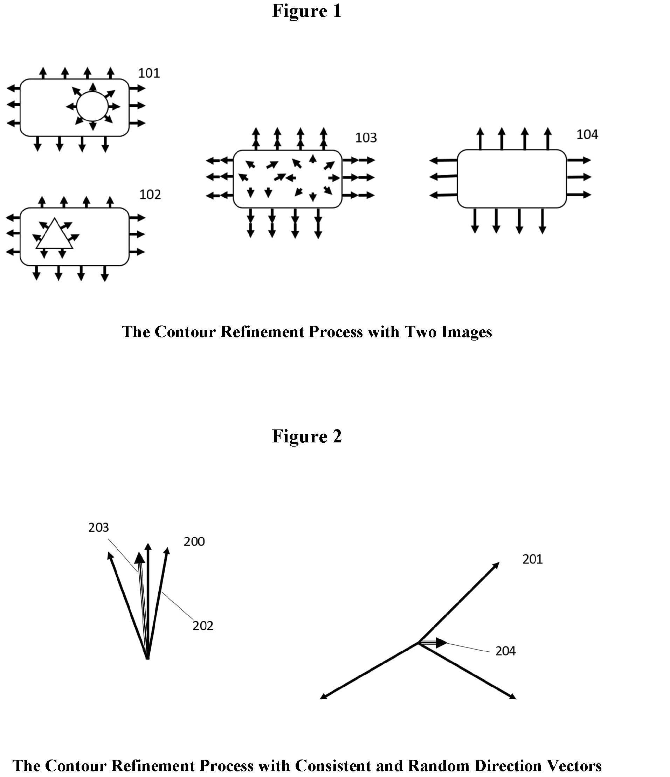

This invention uses the aligned images to identify stable points and to compute their location and direction. Two functions are used for this, a **combining function** to combine the points of multiple aligned images and a **decision function** that computes which points should be considered as stable. The combining function collects for each pixel location of the aligned images the direction vectors of all aligned images at that pixel location and computes a **representative direction vector** based on those **collected direction vectors**. In a first embodiment, the combining function simply selects the direction vector of the first or of a random aligned image as representative direction vector. In the preferred embodiment, the combining function computes the sum over the direction vectors. In another preferred embodiment, the combining function computes the mean overall direction vectors. In another embodiment, the combining function computes a robust estimator overall direction vectors, such as the median or an iteratively refined, robust estimator (Koch, [chapter 3.8], 1999). Figure 1 depicts the combining function. Here one object instance 101 is schematically depicted that consists of a rectangle and a small circle inside the rectangle. Further, one instance 102 is depicted that consists of a rectangle and a triangle inside the rectangle. The small arrows at the contours depict the edge points with the direction vector. The outer rectangular part of the models represents the stable part of the instance. The small circle and the triangle schematically represent the unstable parts or edges in the input images. After alignment of the two instances a set of direction vectors is obtained for each point, as shown for instance 103.

In the preferred embodiment, the decision function uses the representative direction vector of each pixel location to decides if the pixel should be used as stable point. Figure 1 depicts the decision function in instance 104, where only the plurality of stable model points at the rectangle edges is kept, and the circle and triangle pixels are discarded. In one embodiment, the decision function is a threshold on the length of the representative direction vector. Since for a set of random direction vectors that sum has an estimated value of zero, the length of the sum is an indicator of how much the direction vectors agree over all aligned images. Further, pixels that are not part of an edge will have a direction vector with a small length. Thus, the length of the sum over all direction vectors indicates the agreement of the direction vectors. Similar arguments can be made for other embodiments of the combining function. This is illustrated in Figure 2, where for illustrative purposes the representative direction vector is the sum over all collected direction vectors. In one case we have normalized direction vectors 202 that show in approximately the same direction 200 that result in a representative direction vector 203 that is nearly of the same length as the normalized input direction vectors. In case that the input directions vectors show in random direction 201 the representative combined direction vector 204 is much shorter. For both the addition and mean functions, a threshold is a suitable decision function to apply on each pixel. In another embodiment, the decision function computes the variance or standard deviation of the collected direction vectors of each pixel and uses a threshold on that variance to decide if each pixel is stable. In another embodiment of both the combining function and decision function, the cosine similarity instead of the Euclidian distance is used to compute the mean, median, variance or standard deviation of a set of direction vectors. One further embodiment of the invention is to divide the combined direction vectors by the number of input images to result in direction vectors with a mean amplitude which remains normalized to length 1.

In all embodiments of the combining and decision function, the thresholds can either be predetermined, or dynamic. Dynamic thresholds are such that either a fixed number of values is selected, or that a certain percentage of values is selected

In a further embodiment, **intermediate images** can be created by using the representative direction vectors as pixel-wise vector values. In this embodiment, the decision function can be applied for instance pixel wise or on various neighboring pixels, to decide whether each pixel is stable or not, based on the distribution of representative direction vectors in the neighborhood of the pixel.

The result of the decision function is a plurality of stable points or pixels that will be used in later processing steps. Applying the decision function results in minimizing the effect of or even excluding direction vectors that represent artefacts or unstable parts of the object instances. One typical application of the resulting stable pixels is to generate an object recognition model based on them.

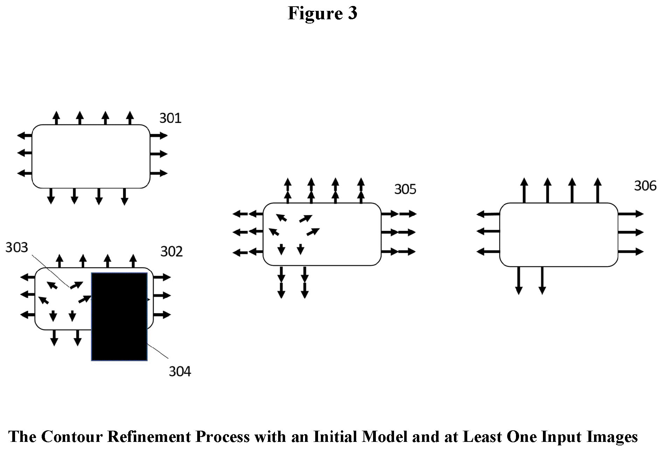

In one typical embodiment, the invention provides a method to improve an existing object recognition model which is passed as input by refining its contours to exclude unstable model points and include stable model points that were not included in the initial model. This method receives an initial object recognition model as input, in addition to other needed input in the typical embodiment explained above. The input images in this case do not have to be pre-aligned, as the initial object recognition model provided as input can be used to automatically align input images. This is depicted in Figure 3 where an initial object recognition model is provided as input shown as the rectangle with its contour model points 301. An input image 302 is also provided, where the rectangular object is displayed, but additional noisy pixels 303 are to be seen as well. Additionally, a part of the object is occluded by another object 304. After combining the direction vectors from the model with the direction vectors from the input image we obtain the combined direction vectors 305. Following the same logic as in the method without an input model, the representative direction vectors corresponding to unstable model points will have smaller length. The model points corresponding to the unstable model points can be identified and excluded from the initial model, as shown in 306.

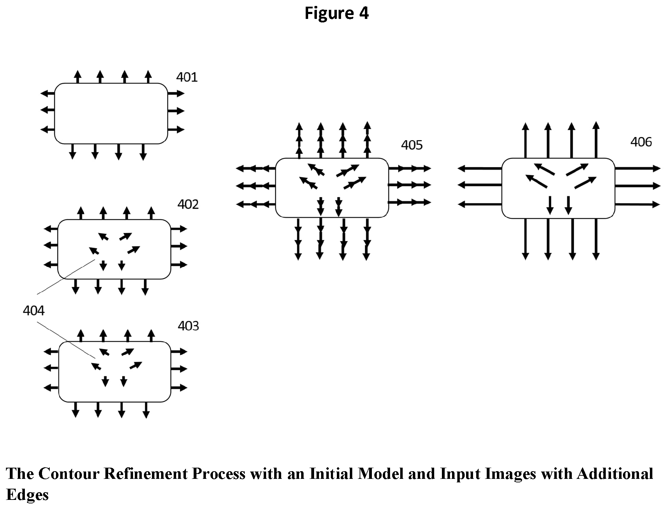

One preferred embodiment of the invention is to not only to exclude model points that are unstable, but also to add new model points that were initially not included in the model. This allows correcting an initial model that might not have contained important model points, which in turn can make the matching more robust. Here, stable points are found and their corresponding model points are identified. If the initial model did not include them, it can be extended to include the identified stable points. This is depicted in Figure 4 where the initial object recognition model 401 does not include the internal contour inside the rectangle. Since both input images 402 and 403 include the internal contour 404, the collected direction vectors 405 result in extra stable model points that are absent from the initial model. Accordingly, the adapted object recognition model 406 is extended to include the model points corresponding to the stable model points on the internal contour.

A further embodiment of the invention is to use the input images to refine the direction vectors of already existing model points. In some cases, a stable model point is already included in the initial object recognition model, but its direction vector is not accurate. With the information from the combined direction vector at this model point, the orientation and the length of the direction vector can be improved.

To speed up the search, template matching typically employs **a multi-level approach**, also called **pyramid approach** (Steger, 2001; Steger et al., [chapter 3.11.2], 2018; Tanimoto, 1981 [). For this, **a multi-level representation** of both the model and the search image is created. This multi-level representation defines different discretization levels that are smoothed and subsampled versions of the original image. In a preferred embodiment, the multi-level representation is a mean image pyramid. In another preferred embodiment, a Gaussian image pyramid is applied. These discretization levels are defined from coarse to fine, where the finest, i.e., lowest level is defined as the original image. The search algorithm is then initiated by performing the full search only on the coarsest or highest level and identifying potential candidates. The candidates are accordingly tracked through the discretization levels. Tracking is performed by searching for the candidate on the next fine level using a restricted set of pose parameters that are close to the pose parameters of the candidate, thus effectively refining the pose parameters. On each level and for each candidate, a decision is made whether the candidate should be tracked further or discarded. The candidates are tracked until the lowest level is reached and the remaining candidates, i.e., search results or object instances are returned. In the following exposition, recursive subdivision, multi-level representation, and image pyramid are used synonymously.

Several parameters can be used to control the pyramid approach, affecting both the execution time and the robustness and quality of the results: The number of pyramid levels as well as the zoom factor between two pyramid levels; the number of candidates initially found on the highest level, as well as the number of candidates tracked to each successive level; the minimum score of the candidates on the different levels; the highest pyramid level where the full search is performed, and the lowest pyramid level until which the candidates are tracked; the minimum contrast for a gradient to be considered an edge; the maximum overlap of two matches before they are deduplicated, i.e., considered to be the same match; the range of transformations, including the range of rotations, the range of isotropic or anisotropic scales, the search region, and the range of translations.

Most of these parameters represent a trade-off between runtime and detection performance. Parameter settings that lead to a higher detection rate at the cost of runtime are called **relaxed parameters**. Relaxed parameters can be used to robustly detect instances in an image during the offline phase, but typically lead to runtimes that are prohibitive in the online phase. In practice, tuning those parameters by hand for each object class and use-case is difficult, time-consuming, and thus error-prone and expensive. This invention provides a method that estimates suitable parameter values for a particular use-case. This allows creating an object detection model that has optimal runtime and detection performance on the given use-case, while requiring minimal manual work for fine-tuning. To achieve this, prior knowledge about the expected search images and object instances is needed in the form of labeled data. The method expects at least one input image, each image containing at least one instance of the object. Additionally, the object recognition model is to be provided as input. Further, the user can restrict the parameters that shall be optimized.

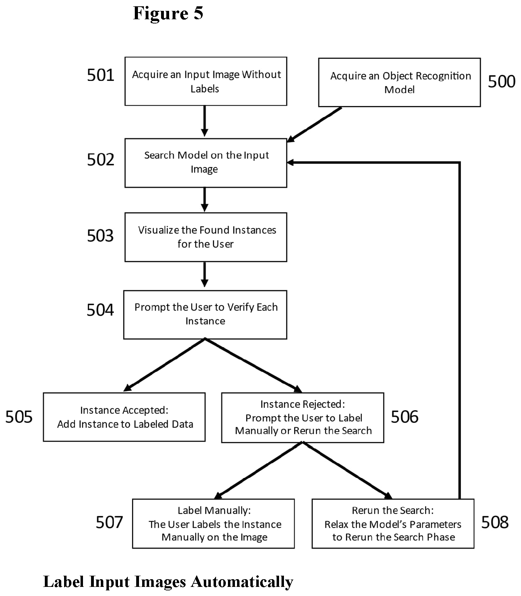

In some cases, the input images need to be labeled to indicate the position of the instance or instances on each image. To obtain this labeled data, the method supports two different possibilities. In the typical embodiment, the user of the method provides the labeled data as input to the method. This label can be obtained using well-known image processing methods, such as segmentation, to find a region serving as instance label for the object's instance. In another embodiment, the method performs a search on each of the input images using the provided object recognition model, using the detected instances as instance labels. To ensure that all potential instances are found, all parameter values are relaxed prior to searching. This is depicted in Figure 5. The method accepts as input the object recognition model (step 500) as well as the input images where no labels are available (step 501). The method searches the model on each input image (step 502) and visualizes the found instances for the user (step 503). The user is then prompted to verify each instance (step 504) using with the possibility of marking it as an accepted label (step 505) or an incorrect one (step 506). If the user accepts the instance, it will be added to the labeled data (step 505). If the instance is rejected (step 506), the user can decide to label the instance by providing it manually (step 507) or prompt the method to rerun the search (step 508). In the latter case, the model's parameters are relaxed before rerunning the method starting from the search phase (step 502).

After the labeled data is obtained, this invention estimates suitable values for both the highest and the lowest pyramid levels in the current use-case. Here, the number of pyramid levels that will be estimated and used is a critical decision that directly influences the runtime of the object recognition method, as well as its robustness. The shape of the input model plays the major role in this estimation, since the coarsest level is estimated by choosing the highest possible level which maintains acceptable detail in the model's contour, i.e., a minimal number of points for the model's contour at this level. If the contour is very small on that level, it is hard to discriminate the object from, e.g., clutter. In that case, too many possible match candidates must be evaluated and potentially tracked further. If the estimated highest pyramid level is chosen to be lower than it could be, the full search on the highest pyramid level is prohibitively slow. In the preferred embodiment, the method tries multiple possible values for the highest pyramid level. For each such value, the results of the object recognition method are evaluated against the labeled data. The highest pyramid level for which either all or a user-acceptable number of labeled data were detected is then used as highest pyramid level. In most cases, the lowest pyramid level is estimated to be level 1, i.e., the original image. In some cases, however, the sample input images might contain a high level of noise, low contrast, or other irregularities which results in losing correct matches while tracking to the lowest pyramid level. In that case, the suitable value of the lowest pyramid level is chosen by finding the lowest possible level on which all labeled data is still correctly tracked and found. In an alternative embodiment, the highest and lowest pyramid levels are provided by the user.

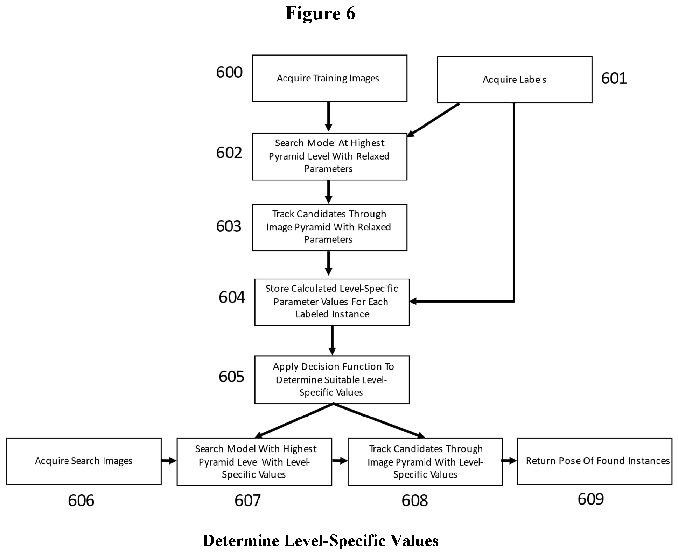

After obtaining the highest and the lowest pyramid levels, the object recognition method is applied on the input images using relaxed parameters. This is depicted in Figure 6, at the top of which are the acquired images (step 600) and labels (step 601). On each input image, the search of the input object recognition model is applied. In an object recognition method, search is performed at the highest pyramid level to identify the candidates (step 602) that are then tracked through the image pyramid (step 603). One preferred embodiment relaxes the parameter values automatically and recursively, until all labeled instances in all input images are found. During the search phase, calculated level-specific parameter values are stored for each labeled instance (step 604), called **intermediate values**. In this list of intermediate values, only certain values in the relaxed parameter range will be occurring. One example could be that the relaxed parameters of the instance's rotation allow the full circle (0 to 360 degree), meaning that all rotations are searched, but during the search, only instances inside the range of -5 to +5 degrees are actually found. At the end of the search phase for all input images, an extensive list of observed values of each parameter on each pyramid level is available. The method then employs a suitable **combining function** for each parameter to determine level-specific parameter values (step 605). The process until now is typically part of an offline step. During online processing of the object recognition system, when search images are acquired (step 606), a search on the highest pyramid level (step 607) and tracking of the candidates (step 608) benefit from these level-specific parameter values, to return a pose for each of the found instances (step 609). In the example of rotation range, the search could be restricted in the online search phase to accept -5 to +5 degrees instead of the full circle.

Various parameters can benefit from the estimation of level-specific parameter values, including parameters relevant to the generation of the model and parameters relevant to the search phase of the model. Among the parameters relevant to the model's generation are the contrast of the edge detection, the isotropic scaling parameters (isotropic minimum scale, isotropic maximum scale) and the anisotropic scaling parameters (minimum row scale, maximum row scale, minimum column scale, and maximum column scale). As for the parameters relevant to the search phase, the minimum score for an accepted instance, the accepted maximum overlap between two different instances as well as the angle parameters (angle start, angle end) can benefit from level-specific estimated values. An example of how level-specific values can be beneficial in an object recognition method is the estimation of the minimum score of an instance. When searching a model from coarse to fine, instances are compared to the model on each discretization level using a similarity measure, which results in a score. Depending on this score value, an instance is tracked further down to a finer discretization level. Typically, the score is compared to a minimum score that defines the lowest acceptable score for an instance. Having a level-specific estimation of the score helps to optimize this decision when an instance is worth further tracking, without risking discarding good candidates or accepting more candidates than needed.

Depending on the parameter to be estimated, a suitable combining function is used to determine the estimated value. For some parameters, such as the minimum score of a match, the minimum scale in row or column direction, or the start angle of expected rotations, the suitable value is chosen to be the minimum of the stored parameter values at each level. For other parameters, such as the end angle of expected rotations or the maximum scale in row or column direction, the suitable value is chosen to be the maximum of the stored parameter values at each level. In further embodiments, the minimum or maximum values can be used after relaxing them by adding (subtracting) or multiplying (dividing) a safety margin. This safety margin can be a probabilistic value that is based on the modelled distribution of the collected data. In another embodiment, the modelled distribution of the data can be used for some parameters to define a quantile confidence interval. In that sense, the estimated value is determined by defining a percentage of the labeled instances that must be correctly found in the search phase when this value is used. In a further embodiment, the mean or median values of the different stored instance values can be used. Mean or median values can be also relaxed by adding or subtracting standard deviation confidence values to ensure that all potential instances are found. In a typical embodiment, methods from the field of robust error statistics are used to obtain a suitable value. Here outliers are modeled and removed from the distribution. Famous estimators are e.g., the methods of Tukey, Huber, and Gauss (Steger et al., [chapter 3.8.1.2], 2018). Furthermore, statistical models include classification methods as well as machine learning methods. In the case of machine learned statistical models, models that were previously trained on labeled data from previous use-cases can be used to increase the robustness of the estimated parameter values.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

The invention is also defined by the following items:
1. A method for robustly updating parameters of an object recognition model, comprising the steps of
   a. providing an object recognition model, the model containing a plurality of model points, each model point augmented with a coordinate and a direction vector;
   b. providing at least one digital image, each digital image containing at least one object instance;
   c. obtaining, for each digital image, a direction vector for each pixel in the image;
   d. obtaining, for each object instance in each digital image, transformation parameters that align the model with said object instance;
   e. for each object instance, transforming the model point coordinates into image pixel coordinates by applying the transformation parameters of said instance;
   f. collecting, for each model point, the set of direction vectors for all pixels onto which the model point was transformed for the different instances;
   g. for each model point, applying a combining function on the set of all collected direction vectors of said model point to produce a new representative direction vector.
   h. applying a decision function on the collected direction vectors and representative direction vectors to decide which model points should be regarded as stable;
   i. updating the object recognition model by replacing the direction vectors of those model points deemed stable with the representative direction vectors and removing those model points not deemed stable.
2. The method of Item 1 wherein the combining function includes the addition of all direction vectors, the mean overall direction vectors, or a robust estimator of all direction vectors.
3. The method of Item 1 or 2, wherein the decision function includes a threshold on the length of the representative direction vectors.
4. The method of Item 1, 2, or 3, wherein the combining function additionally computes the variance of the set of all collected direction vectors of each model point, and where the decision function includes a threshold on said variance.
5. A method for robustly creating an object recognition model, comprising the steps of
   a. providing the maximum extent of the target shape;
   b. providing at least two digital images, each digital image containing at least one object instance;
   c. obtaining, for each pixel in each digital image, a feature vector that contains a direction vector;
   d. obtaining, for each object instance in each digital image, transformation parameters that align the object instances in a common coordinate frame;
   e. collecting, for each pixel inside the maximum extent of the target shape, the set of feature vectors for all pixels onto which the pixel was transformed for the different instances;
   f. for each pixel inside the maximum extent of the target shape, applying a combining function on the set of all collected feature vectors of said pixel to produce a new representative feature vector.
   g. applying a decision function on the collected feature vectors and representative feature vectors to decide which pixels should be regarded as stable;
   h. creating an object recognition model using those pixels that were deemed stable along with their representative feature vector.
6. The method of Item 1 wherein the combining function includes the addition of all direction vectors, the mean overall direction vectors, or a robust estimator of all direction vectors.
7. The method of Item 1 or 6, wherein the decision function includes a threshold on the length of the representative direction vectors.
8. The method of Item 1, 6, or 7, wherein the combining function additionally computes the variance of the set of all collected direction vectors of each model point, and where the decision function includes a threshold on said variance.
9. The method of any one of Items 1 to 8, wherein the feature vectors computed in step c additionally contain the gray value of the corresponding pixel.
10. A method for robustly updating level-specific parameters of an object recognition model, comprising the steps of
   a. providing an object recognition model;
   b. providing at least one digital image, each digital image containing at least one object instance;
   c. providing a set of parameters to be optimized;
   d. for each digital image,
      i. creating a multi-level representation of said image, corresponding to discretization levels from coarse to fine, where at least two different discretization levels are used;
      ii. searching the object recognition model on the multi-level representation of said image from coarse to fine discretization levels, producing a set of detected instances;
      iii. identifying, for each detected instance, if it corresponds to an object instance;
      iv. for each detected instance that corresponds to an object instance, collecting the intermediate values of the parameters to be optimized for all discretization levels;
   e. for each discretization level and each parameter to be optimized, applying a combining function onto the collected intermediate values of said parameter on said pyramid level to obtain a robust estimate of said parameter, and setting said robust estimate as new parameter in the object recognition model.
11. The method of item 1 wherein the set of parameters to be optimized contains at least one of the minimum score, the minimum contrast, the maximum overlap of two matches, the range of rotations, the range of scales, or the search region.
12. The method of item 1 or 11, wherein transformation parameters are provided for each object instance, and said transformation parameters are used to identify which detected instances correspond to object instances in step iii.
13. The method of item 1, 11 or 12, wherein approximate positions are provided for each object instance, and said approximate positions are used to identify which detected instances correspond to object instances in step iii.
14. The method of any one of items 1 to 13, wherein the number of object instances is provided for each digital image, and said number of object instances is used to identify which detected instances correspond to object instances in step iii.
15. The method of any one of items 1 to 14, wherein additional user input is used to identify which detected instances correspond to object instances in step iii.
16. The method of any one of items 1 to 15, wherein the combining function is a quantile of the collected intermediate values or uses a probabilistic model to estimate a robust parameter based on the collected intermediate values.
17. A system comprising a processor, wherein the processor is configured to execute the method for robustly updating parameters of an object recognition model according to the method of any one of items 1 to 4.
18. A system comprising a processor, wherein the processor is configured to execute the method for robustly creating an object recognition model according to the method of any one of items 5 to 9.
19. A system comprising a processor, wherein the processor is configured to execute the method for robustly updating level-specific parameters of an object recognition model according to the method of any one of items 10 to 16.

### REFERENCES

C. Steger, M. Ulrich, and C. Wiedemann, Machine Vision Algorithms and Applications, 2nd ed. Weinheim: Wiley-VCH, 2018.
K.-R. Koch, Parameter Estimation and Hypothesis Testing in Linear Models. Berlin Heidelberg: Springer, 1999.
Steven L. Tanimoto Template matching in pyramids. Computer Graphics and Image Processing, 16:356-369, 1981.
M. Ulrich, C. Steger, U.S. Patent No. 7,953,290, 2006.
C. Steger, U.S. Patent No. 7,062,093, 2001.
MVTec HDevelop Users' Guide, Version 22.11, https://www.mvtec.com, 2022.

## Claims

1. A method for robustly updating level-specific parameters of an object recognition model, comprising the steps of
a. providing an object recognition model;
b. providing at least one digital image, each digital image containing at least one object instance;
c. providing a set of parameters to be optimized;
d. for each digital image,
i. creating a multi-level representation of said image, corresponding to discretization levels from coarse to fine, where at least two different discretization levels are used;
ii. searching the object recognition model on the multi-level representation of said image from coarse to fine discretization levels, producing a set of detected instances;
iii. identifying, for each detected instance, if it corresponds to an object instance;
iv. for each detected instance that corresponds to an object instance, collecting the intermediate values of the parameters to be optimized for all discretization levels;
e. for each discretization level and each parameter to be optimized, applying a combining function onto the collected intermediate values of said parameter on said pyramid level to obtain a robust estimate of said parameter, and setting said robust estimate as new parameter in the object recognition model.

2. The method of claim 1 wherein the set of parameters to be optimized contains at least one of the minimum score, the minimum contrast, the maximum overlap of two matches, the range of rotations, the range of scales, or the search region.

3. The method of claim 1 or 2, wherein transformation parameters are provided for each object instance, and said transformation parameters are used to identify which detected instances correspond to object instances in step iii.

4. The method of claim 1, 2 or 3, wherein approximate positions are provided for each object instance, and said approximate positions are used to identify which detected instances correspond to object instances in step iii.

5. The method of any one of claims 1 to 4, wherein the number of object instances is provided for each digital image, and said number of object instances is used to identify which detected instances correspond to object instances in step iii.

6. The method of any one of claims 1 to 5, wherein additional user input is used to identify which detected instances correspond to object instances in step iii.

7. The method of any one of claims 1 to 6, wherein the combining function is a quantile of the collected intermediate values or uses a probabilistic model to estimate a robust parameter based on the collected intermediate values.

8. A system comprising a processor, wherein the processor is configured to execute the method for robustly updating level-specific parameters of an object recognition model according to the method of any one of claims 1 to 7.
